# EUROPÄISCHE PATENTSCHRIFT

(11) **EP 0 650 141 B1**
(45) Veröffentlichungstag und Bekanntmachung des Hinweises auf die Patenterteilung: **12.12.2001**
(21) Anmeldenummer: 94114405.7
(22) Anmeldetag: 14.09.1994
(51) Int. Cl.: G06K 19/04, G07F 1/06

(54) **Parkkarte zur gebührenpflichtigen Betätigung einer Parkschranke**
Parking card for charge control of a parking gate
Carte de stationnement pour commander une barrière d'un stationnement payant

(30) Priorität: 21.10.1993 DE 4335868
(43) Veröffentlichungstag der Anmeldung: 26.04.1995
(73) Patentinhaber: Farmont Technik GmbH & Co. KG, D-40217 Düsseldorf (DE)
(72) Erfinder: Farmont, Hans, D-40885 Ratingen (DE)
(74) Vertreter: Sparing - Röhl - Henseler Patentanwälte

(56) Entgegenhaltungen:
- EP-A- 0 436 497
- DE-U- 9 302 481
- US-A- 3 784 796

## Beschreibung

Die Erfindung betrifft eine Parkkarte zur gebührenpflichtigen Betätigung einer Parkschranke nach dem Oberbegriff des Anspruchs 1.

Eine derartige runde, flächige Parkkarte ist aus DE-U-93 02 481 bekannt. Eine solche Parkkarte, die die Gestalt einer runden Münze besitzt, hat eine Vielzahl Vorteile bezüglich ihrer Handhabung, da sie nicht nur für verschiedene Parkhausbenutzer oder Parkgeländebenutzer wiederverwendbar ist, sondern auch in einfacher Weise für die jeweilige Ausgabe vereinzelt werden kann. Des weiteren kann die Rollfähigkeit beim Transportieren einer derartigen Parkkarte zu Identifikations- und Kommunikationsstationen für die Abwicklung des Parkvorgangs genutzt werden.

Aus der EP-A-0 436 497 ist ein münzförmiger Datenträger bekannt, der von einem Kunststoffring umgeben ist. Dieser Ring dient zur besseren visuellen Erkennung des Münzwertes und zur Erhöhung der Fälschungssicherheit.

Bei der Verwendung der gattungsgemäßen Parkkarten hat es sich als nachteilig erwiesen, daß die Parkkarte aufgrund ihres Dauereinsatzes einem erhöhten Verschleiß unterliegt, was zu einer Abnutzung bzw. Abgriff der Parkkarte führt. Ebenso führt eine Beschädigung der Parkkarte durch beispielsweise Herausbrechen oder Brechen einzelner Teilbereiche zu einer wesentlichen Verschlechterung der Rolleigenschaften der Parkkarte. Die Abnutzung oder Beschädigung der Parkkarte wirkt auch nachteilig auf den Vereinzelungsvorgang der Parkkarten vor der Abgabe an einen Parkkunden, weil die Trennung der im allgemeinen gestapelten Parkkarten durch Abstreifen der zuunterst liegenden Parkkarte erschwert wird.

Aufgabe der Erfindung ist es daher, eine Parkkarte zur gebührenpflichtigen Betätigung einer Parkschranke nach dem Oberbegriff des Anspruchs 1 zu schaffen, die langlebig ist. Eine weitere Aufgabe besteht darin, die Vereinzelungseigenschaften der Parkkarte zu verbessern.

Diese Aufgabe wird gemäß dem kennzeichnenden Teil des Anspruchs 1 gelöst.

Hierdurch wird eine Parkkarte geschaffen, die randseitig einen Verkleidungsring aufweist, der neben seiner Funktion als Schutzring in Abhängigkeit von seinen Materialeigenschaften auch das Rollvermögen der Parkkarte durch Einflußnahme auf das Abrollverhalten verbessern kann. Des weiteren kann mittels des Rings der Randbereich der Parkkarte eine Konturänderung erfahren, um gegebenenfalls Angriffs- und/oder Gleitflächen für den Vereinzelungsvorgang bereitzustellen.

Vorzugsweise besitzt der Verkleidungsring einen U-förmigen Querschnitt mit einer Vorder- und Rückseitenerstreckung, damit der Ring nicht nur die Umfangsfläche des Kunststoffstücks, sondern auch einen radialen Teilabschnitt desselben überdeckt. Dazu kann das Kunststoffstück randseitig an der Vorder- und Rückseite umlaufende Aussparungen aufweisen, die der Ring ausfüllt und dabei mit der Vorder- und Rückseite des Kunststoffstücks fluchtet.

Über den Ring kann der Randbereich des Kunststoffstücks auch radial verjüngt oder verdickt werden, wodurch Gleit- und/oder Anschlagflächen für seitlich an der Parkkarte angreifende Vereinzelungs- und/oder Stapeleinrichtungen entstehen.

Als Material für den Ring sind beispielsweise Metalle einsetzbar, die eine grössere Härte und ein höheres Gewicht als der verwendete Kunststoff für die flächige Scheibe besitzen. Verwendbar für den Ring sind ebenfalls Kunststoffe, die gegenüber dem Kunststoff für die flächige Scheibe eine höhere Verschleißfestigkeit besitzen und/oder zur Gruppe der stoßabsorbierenden Kunststoffe, z. B. PUR Schaum, gehören.

Der Ring kann in geeigneter Weise an dem Kunststoffstück befestigt sein, wozu unter anderem das Kleben, Quetschen oder sonstiger Reibschluß zählt.

Weitere Ausgestaltungen der Erfindung sind der nachfolgenden Beschreibung und den Unteransprüchen zu entnehemen.

Die Erfindung wird nachstehend anhand der in den beigefügten Abbildungen dargestellten Ausführungsbeispiele näher erläutert.
- Fig. 1: zeigt schematisch eine Draufsicht eines ersten Ausführungsbeispiels einer Parkkarte,
- Fig. 2: zeigt schematisch einen Vertikalschnitt der Parkkarte gemäß Fig. 1,
- Fig. 3: zeigt schematisch einen Vertikalschnitt eines zweiten Ausführungsbeispiels einer Parkkarte,
- Fig. 4: zeigt schematisch einen Vertikalschnitt eines dritten Ausführungsbeispiels einer Parkkarte,
- Fig. 5: zeigt schematisch einen Vertikalschnitt eines vierten Ausführungsbeispiels einer Parkkarte,
- Fig. 6: zeigt schematisch einen Vertikalschnitt eines fünften Ausführungsbeispiels einer Parkkarte.

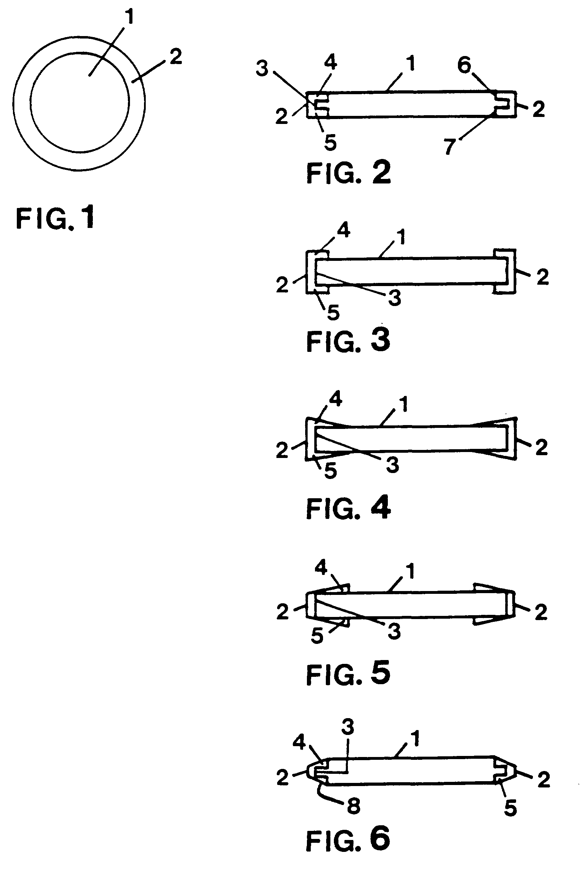

Fig. 1 und Fig. 2 zeigen ein erstes Ausführungsbeispiel einer Parkkarte zur gebührenpflichtigen Betätigung einer Parkschranke aus einem runden, flächigen Kunststoffstück 1, das randseitig einen umlaufenden Ring 2 trägt. Integriert in das flächige, runde Kunststoffstück 1 ist ein elektronisches Bauelement zum wiederholten und lageunabhängigen Abspeichern und gegebenenfalls Verarbeiten von benutzerbezogenen Parkkenndaten, wie insbesondere die Ein- und Ausfahrtzeit.

Der Ring 2 ist kappenartig auf das Kunststoffstück 1 aufgesetzt und überdeckt die Umfangsfläche 3 der runden Kunststoffscheibe 1. Dazu besitzt der Ring 2 ein im wesentlichen U-förmiges Profil mit einer Vorderseitenerstreckung 4 und mit einer Rückseitenerstreckung 5, die sich jeweils über einen radialen Teilabschnitt des Randbereiches der Kunststoffscheibe 1 erstrecken. Die radiale Länge des überdeckten Teilabschnitts der Kunststoffscheibe 1 beträgt vorzugsweise weniger als 20% des Radius der Kunststoffscheibe 1.

Wie aus Fig. 2 ersichtlich, ist die Kunststoffscheibe 1 umfangsseitig zapfenartig ausgebildet, da die Vorder- und Rückseite jeweils randseitig in Aussparungen 6, 7 enden, in denen der Ring 2 mit seiner Vorder- und Rückseitenerstreckung 4, 5 sitzt. Die Aussparungen 6, 7 und die Vorder- und Rückseitenerstreckung 4, 5 des Rings sind in ihren Abmessungen so aufeinander abstimmbar, daß das ausgesparte Kunststoffmaterial der Scheibe 1 von dem Ring 2 substituiert wird. Kunststoffscheibe 1 und Ring 2 fluchten dann hinsichtlich der Vorder- und Rückseite miteinander, d.h. Kunstoffscheibe 1 und Ring 2 sind formschlüssig miteinander verbunden.

Die Kunststoffscheibe 1 besteht aus einem ersten Material, insbesondere einem Thermoplast, beispielsweise Polyamid. Der Ring 2 besteht aus einem zweiten Material mit einer anderen Verschleißfestigkeit und/oder Elastizität als das erste Material der Kunststoffscheibe 2. Eine andere Verschleißfestigekeit besitzt der Ring 2, wenn er beispielsweise aus einem Metall, mit dem die Kunststoffscheibe 1 wie vorstehend beschrieben randseitig umbördelt ist, oder aus einem faserverstärkten Kunststoff besteht. Eine andere Elastizität besitzt der Ring 2, wenn er beispielsweise aus einem Elastomer, wie Polyurethan, besteht.

Der Ring 2 ist dabei dauerhaft an der Kunststoffscheibe 2 befestigt, was unter anderem durch Kleben, Quetschen oder sonstigen Reibschluß erfolgen kann.

Fig. 3 bis 6 zeigen weitere Ausführungsbeispiele einer Parkkarte, die sich von dem beschriebenen ersten Ausführungsbeispiel nur hinsichtlich der Gestalt des Ringes 2 und/oder der Gestalt des Randbereiches der Kunststoffscheibe 1 unterscheiden.

Gemäß Fig. 3 ist der Ring 2 randseitig umlaufend auf eine Kunststoffscheibe 1 aufgesetzt. Die Vorder- und Rückseitenerstreckung 4, 5 des Rings 2 übergreifen jeweils einen radialen Teilabschnitt der Vorder- und Rückseite der Kunststoffscheibe 1.

Gleiches gilt für das dritte und vierte Ausführungsbeispiel gemäß Fig. 4 und Fig. 5, wo sich aber zusätzlich die Vorder- und Rückseitenerstreckung 4, 5 des Rings 2 jeweils radial nach innen in der Stärke verjüngen (vgl. Fig. 4) oder verdicken (vgl. Fig. 5). Das Stapel- und/oder Abstreifverhalten aufeinandergelegter Parkkarten wird durch eine derartige Randgestaltung verbessert.

Fig. 6 zeigt ein fünftes Ausführungsbeispiel, bei dem die Kunststoffscheibe 1 entsprechend dem ersten Ausführungsbeispiel mit randseitigen Ausnehmungen 6, 7 für einen fluchtenden Anschluß des Rings 2 ausgebildet ist. Der Ring 2 hat hier allerdings eine radial nach außen sich verjüngende Gestalt, da die Vorder- und Rückseitenerstreckung 4, 5 eine abgeschrägte Kontur aufweisen, die auch formgebend für den Randbereich der Kunststoffscheibe 1 ist. Die Parkscheibe aus der Kunststoffscheibe 1 mit aufgesetzten Ring 2 besitzt folglich einen im Schnitt kegelstumpfartig ausgebildeten randseitigen Umfangsabschnitt. Eine derartige auf der Vorder- oder Rückseite liegende Parkkarte liegt dann mit zumindest einem Teil des Randabschnitts nicht auf einer Auflagefläche auf und besitzt Gleitflächen 8 für einen Angriff an der Parkkarte.

## Patentansprüche

1. Parkkarte zur gebührenpflichtigen Betätigung einer Parkschranke in Form eines runden, flächigen Kunststoffstücks mit einem integrierten elektronischen Bauelement zum benutzerbezogenen Abspeichern und gegebenenfalls Verarbeiten von Parkkenndaten, **dadurch gekennzeichnet, daß** das Kunststoffstück (1) randseitig einen umlaufenden Ring (2) aus einem Material mit einer höheren Verschleißfestigkeit als das runde Kunststoffstück (1) aufweist, wobei der Randbereich durch den Ring (2) eine Konturänderung erfährt, die Angriffs- und/oder Gleitflächen für einen Vereinzelungsvorgang bereitstellt.

2. Parkkarte nach Anspruch 1, **dadurch gekennzeichnet, daß** der Ring (2) einen U-förmigen Querschnitt mit einer einen Randabschnitt des Kunststoffstücks (1) überdeckender Vorder- und Rückseitenerstreckung (4, 5) besitzt.

3. Parkkarte nach Anspruch 2, **dadurch gekennzeichnet, daß** die Vorder- und Rückseitenerstreckung (4, 5) des Rings (2) mit der Vorder- und Rückseite des Kunststoffstücks (1) fluchten.

4. Parkkarte nach Anspruch 2, **dadurch gekennzeichnet, daß** die Vorderseitenerstreckung (4) und/oder Rückseitenerstreckung (5) des Rings (2) einen keilförmigen Dickenverlauf aufweisen oder aufweist, der radial zu- oder abnimmt.

5. Parkkarte nach einem der Ansprüche 1 bis 4, **dadurch gekennzeichnet, daß** der Ring (2) aus einem Metallblech besteht, das das Kunststoffstück (1) umfangsseitig umbördelt.

6. Parkkarte nach einem der Ansprüche 1 bis 4, **dadurch gekennzeichnet, daß** der Ring (2) aus einem elastischen, stoßabsorbierenden Material besteht, das das Kunststoffstück (1) umfangsseitig umhüllt.

7. Parkkarte nach einem der Ansprüche 1 bis 6, **dadurch gekennzeichnet, daß** das runde Kunststoffstück (1) aus einem faserverstärkten Kunststoff besteht.

8. Parkkarte nach einem der Ansprüche 1 bis 7, **dadurch gekennzeichnet, daß** das Kunststoffstück (1) mittels des Rings (2) radial sich verjüngend umfangsseitig endet.

## Claims

1. Parking token for operating a car park barrier requiring payment of a fee, in the form of a round, flat plastics member having an integrated electronic component for the user-related storage and optionally processing of parking data, **characterized in that** the plastics member (1) has around its rim a circumferential ring (2) of a material having a higher resistance to wear than the round plastics member (1), the rim region undergoing, as a result of the ring (2), a change in its contours which provides contact and/or slide surfaces for a separating operation.

2. Parking token according to claim 1, **characterized in that** the ring (2) has a U-shaped cross-section having front face and rear face extensions (4, 5) that cover a rim portion of the plastics member (1).

3. Parking token according to claim 2, **characterized in that** the front face and rear face extensions (4, 5) of the ring (2) are flush with the front face and rear face of the plastics member (1).

4. Parking token according to claim 2, **characterized in that** the front face extension (4) and/or the rear face extension (5) of the ring (2) have or has a wedge-shaped sectional shape, which increases or decreases in thickness radially.

5. Parking token according to any one of claims 1 to 4, **characterized in that** the ring (2) consists of sheet metal which forms a bead around the circumference of the plastics member (1).

6. Parking token according to any one of claims 1 to 4, **characterized in that** the ring (2) consists of a resilient, shock-absorbing material which covers the plastics member (1) around its circumference.

7. Parking token according to any one of claims 1 to 6, **characterized in that** the round plastics member (1) consists of a fibre-reinforced plastics material.

8. Parking token according to any one of claims 1 to 7, **characterized in that** the plastics member (1), by means of the ring (2), tapers away radially to the circumference.

## Revendications

1. Carte de parc pour l'actionnement sans paiement d'une barrière de parc, formée d'une pièce de matière plastique, ronde, plate, comportant un composant électronique intégré destiné à enregistrer des données de l'utilisateur et éventuellement à traiter des données d'identification du parc, **caractérisée en ce que** la pièce de matière plastique (1) présente sur son bord une bague périphérique (2) faite d'une matière possédant une plus grande résistance à l'usure que la pièce de matière plastique ronde (1), la bordure présentant grâce à la bague (2) une modification de profil qui prépare les surfaces d'attaque et/ou de glissement pour une opération de séparation.

2. Carte de parc selon la revendication 1, **caractérisée en ce que** la bague (2) possède une section en forme de U comportant des prolongements de faces avant et arrière (4, 5) qui recouvrent une zone du pourtour de la pièce de matière plastique (1).

3. Carte de parc selon la revendication 2, **caractérisée en ce que** les prolongements de faces avant et arrière (4, 5) de la bague (2) affleurent les faces avant et arrière de la pièce de matière plastique (1).

4. Carte de parc selon la revendication 2, **caractérisée en ce que** le prolongement de la face avant (4) et/ou le prolongement de la face arrière (5) de la bague (2) présente(nt) un profil d'épaisseur en forme de coin, qui croît ou décroît radialement.

5. Carte de parc selon l'une des revendications 1 à 4, **caractérisée en ce que** la bague (2) est constituée d'une tôle métallique qui entoure la pièce de matière plastique (1) sur sa périphérie.

6. Carte de parc selon l'une des revendications 1 à 4, **caractérisée en ce que** la bague (2) est faite d'une matière élastique capable d'absorber les chocs, qui enveloppe la pièce de matière plastique (1) sur sa périphérie.

7. Carte de parc selon l'une des revendications 1 à 6, **caractérisée en ce que** la pièce de matière plastique ronde (1) est faite d'une matière plastique renforcée de fibres.

8. Carte de parc selon l'une des revendications 1 à 7 **caractérisée en ce qu'** au moyen de la bague (2), la pièce de matière plastique (1) se termine sur sa périphérie en s'amincissant dans la direction radiale.
